(19) Europäisches Patentamt / European Patent Office / Office européen des brevets

(11) **EP 3 507 588 B1**

(12) **FASCICULE DE BREVET EUROPEEN**

(45) Date de publication et mention de la délivrance du brevet:
**09.02.2022 Bulletin 2022/06**

(21) Numéro de dépôt: **17768186.3**

(22) Date de dépôt: **01.09.2017**

(51) Classification Internationale des Brevets (IPC):
**G01N 21/3504** (2014.01)     **G01J 3/42** (2006.01)
**G01N 21/31** (2006.01)     **G01N 21/359** (2014.01)
**G01J 3/10** (2006.01)     **G01J 3/28** (2006.01)

(52) Classification Coopérative des Brevets (CPC):
**G01N 21/3504; G01J 3/10; G01J 3/108; G01J 3/42;
G01N 21/314; G01N 21/3151; G01N 21/359;**
G01J 2003/2866

(86) Numéro de dépôt international:
**PCT/FR2017/052322**

(87) Numéro de publication internationale:
**WO 2018/042135 (08.03.2018 Gazette 2018/10)**

(54) **PROCÉDÉ D'ANALYSE D'UN GAZ**

VERFAHREN ZUR ANALYSE EINES GASES

METHOD FOR ANALYSING A GAS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.09.2016 FR 1658243**

(43) Date de publication de la demande:
**10.07.2019 Bulletin 2019/28**

(73) Titulaire: **Elichens
38000 Grenoble (FR)**

(72) Inventeur: **CARITU, Yanis
38134 Saint-Joseph-de-Rivière (FR)**

(74) Mandataire: **INNOV-GROUP
310, avenue Berthelot
69372 Lyon Cedex 08 (FR)**

(56) Documents cités:
WO-A2-2007/064370     CN-A- 104 062 265
JP-A- H0 217 429     JP-A- H0 282 137
US-A- 4 560 873     US-A- 5 920 069
US-A1- 2007 029 487     US-A1- 2007 029 488
US-A1- 2009 213 380     US-A1- 2010 223 015

**Description**

**DOMAINE TECHNIQUE**

Le domaine technique de l'invention est l'analyse d'un gaz par une méthode optique.

**ART ANTERIEUR**

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les uns des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La demande de brevet WO2007064370 repose sur un tel principe. Ce document décrit un dispositif d'analyse d'un gaz comportant une source de lumière et un capteur de lumière. Un filtre optique est disposé entre la source de lumière et le capteur de lumière. Ce filtre présente des bandes passantes étroites, typiquement de largeur inférieure à 500 nm, correspondant aux bandes spectrales d'absorption des espèces gazeuses à détecter. Un tel filtre est désigné par le terme "multibandes". Mais une telle configuration présente certains inconvénients. Tout d'abord, la réalisation d'un filtre optique présentant des bandes passantes étroites, séparées les unes des autres, est coûteuse. En outre, un tel filtre peut présenter des difficultés techniques de fabrication. Ce document indique d'ailleurs que lorsque le nombre de bandes spectrales augmente, le recours à un tel filtre est difficilement envisageable. De plus, cette configuration n'est pas versatile et ne fonctionne que pour les espèces gazeuses correspondant au filtre optique réalisé. Il n'est pas possible de quantifier la concentration d'une espèce gazeuse dont la bande spectrale d'absorption ne correspond pas à une bande passante du filtre, sauf à changer le filtre. Par ailleurs, certaines espèces gazeuses présentent des bandes spectrales d'absorption se chevauchant. L'utilisation du filtre multibandes ne permet pas de les séparer et le dispositif ne permet pas de discriminer ces espèces, c'est-à-dire de déterminer une concentration de chacune de ces espèces.

Le document US2009/213380 décrit un dispositif d'analyse de gaz, dans lequel un gaz est illuminé successivement selon différents spectres d'illumination, à l'aide d'une source de lumière. A chaque illumination, le spectre d'illumination du gaz est modifié en interposant successivement différents filtres entre la source de lumière et le gaz à analyser. Un tel dispositif nécessite d'utiliser successivement plusieurs filtres, entre la source de lumière et le gaz, ce qui suppose des moyens mécaniques permettant une commutation entre les différents filtres. On comprend qu'une telle configuration est complexe et n'est pas appropriée à un détecteur de gaz compact et peu onéreux. Elle suppose, d'autre part, de disposer d'un a priori sur les espèces gazeuses présentes dans le gaz, de façon à sélectionner les filtres mis en œuvre.

La présente invention permet de surmonter ces inconvénients en proposant un dispositif et un procédé d'analyse d'un gaz simple, peu coûteux, et pouvant adresser différentes espèces gazeuses, y compris les espèces gazeuses dont les bandes spectrales d'absorption se recouvrent. De plus, le dispositif est aisément adaptable à différents mélanges gazeux ; il ne nécessite pas la réalisation d'un filtre multibandes spécifique à chaque mélange gazeux étudié. Par ailleurs, le nombre d'espèces gazeuses présentes dans le mélange n'est pas limité par des contraintes de conception d'un filtre.

**EXPOSE DE L'INVENTION**

Un objet de l'invention est un procédé d'analyse d'un gaz, selon la revendication indépendante 1 annexée, pour estimer une quantité de plusieurs espèces gazeuses différentes, dites espèces gazeuses candidates, potentiellement présentes dans le gaz, chaque espèce gazeuse candidate étant apte à absorber un rayonnement lumineux dans une bande spectrale d'absorption.

Par fonction spectrale d'absorption, on entend une évolution d'une propriété d'absorption d'une espèce gazeuse en fonction de la longueur d'onde.

Par rayonnement transmis, on entend un rayonnement ayant traversé le gaz entre son émission par la source et sa détection par le capteur de lumière.

Par spectre d'illumination, on entend une distribution de l'intensité du rayonnement d'illumination en fonction de la longueur d'onde.

Au moins deux espèces gazeuses candidates peuvent présenter un coefficient d'absorption molaire supérieur à 50 Mol$^{-1}$cm$^{-1}$ dans la bande spectrale de détection ;

L'étape e) peut comporter la formation d'indicateurs de comparaison représentant une comparaison entre :

- l'intensité du rayonnement détecté par le capteur de lumière lors de chaque étape c) suite à une illumination du gaz selon un spectre d'illumination ;
- une estimation de ladite intensité en fonction de quantités des espèces gazeuses candidates ;

l'étape e) comportant alors une détermination d'un critère global de comparaison à partir des indicateurs de comparaisons, les quantités des espèces gazeuses candidates étant celles pour lesquelles le critère global de comparaison tend vers une valeur prédéterminée. Un indicateur de comparaison est ainsi associé à chaque spectre d'illumination, c'est-à-dire à chaque itération des étapes b) et c). Chaque estimation de l'intensité du rayonnement détecté peut alors être obtenue par :

- une association, à espèce gazeuse candidate, d'une fonction spectrale d'absorption dépendant de la quantité de chaque espèce gazeuse candidate;
- une prise en compte d'une intensité du rayonnement émis par la source de lumière;

l'estimation de l'intensité du rayonnement détecté étant obtenue en effectuant un produit de l'intensité du rayonnement d'illumination émis par la source de lumière par les fonctions spectrales d'absorption de chaque espèce gazeuse candidate.

Le procédé peut comporter, préalablement à l'étape e), une définition a priori des espèces gazeuses candidates susceptibles d'être présentes dans le gaz. Les étapes b) et c) sont de préférence réitérées au moins autant de fois que le nombre d'espèces candidates à rechercher. Le procédé peut comporter l'une quelconque des caractéristiques suivantes, prises isolément ou en combinaison :

- la source de lumière est une source émettant un rayonnement lumineux dont le spectre d'illumination, dans la bande spectrale d'illumination, varie en fonction d'une température de ladite source, de telle sorte que lors de chaque étape b), la température de la source varie;
- la source de lumière comporte des sources de lumières élémentaires aptes à être activées indépendamment l'une de l'autre, de façon à permettre une modulation du spectre d'illumination dans la bande spectrale d'illumination
- la bande spectrale de détection est comprise entre 200 $\mu m$ et 10 $\mu m$ ou entre 1 $\mu m$ et 10 $\mu m$ ;
- au cours d'au moins deux illuminations, le spectre d'illumination comporte une première longueur d'onde et une deuxième longueur d'onde, le ratio de l'intensité du rayonnement d'illumination dans la première longueur d'onde sur l'intensité du rayonnement d'illumination dans la deuxième longueur d'onde étant différent entre les deux illuminations ;
- deux bandes spectrales d'absorption de deux espèces gazeuses candidates se recouvrent au moins partiellement;
- l'intensité du rayonnement d'illumination émis par la source de lumière est déterminée par un capteur de lumière auxiliaire.

Un autre objet de l'invention est un dispositif d'analyse d'un gaz selon la revendication indépendante 12 annexée D'autres avantages et caractéristiques ressortiront plus clairement de la description qui va suivre de modes particuliers de réalisation de l'invention, donnés à titre d'exemples non limitatifs, et représentés aux figures annexées listées ci-dessus.

**FIGURES**

La figure 1 représente un exemple de dispositif d'analyse d'un gaz selon un mode de réalisation.
La figure 2 montre l'évolution du spectre d'illumination d'une source de lumière en fonction de la température.
La figure 3 représente des spectres d'absorbance de différentes espèces gazeuses.
La figure 4 illustre les principales étapes d'un procédé d'analyse d'un gaz selon l'invention.
Les figures 5A et 5B représentent des modes de réalisation mettant en oeuvre un capteur de lumière auxiliaire.
La figure 6 représente un exemple de dispositif selon un autre mode de réalisation.

**EXPOSE DE MODES DE REALISATION PARTICULIERS**

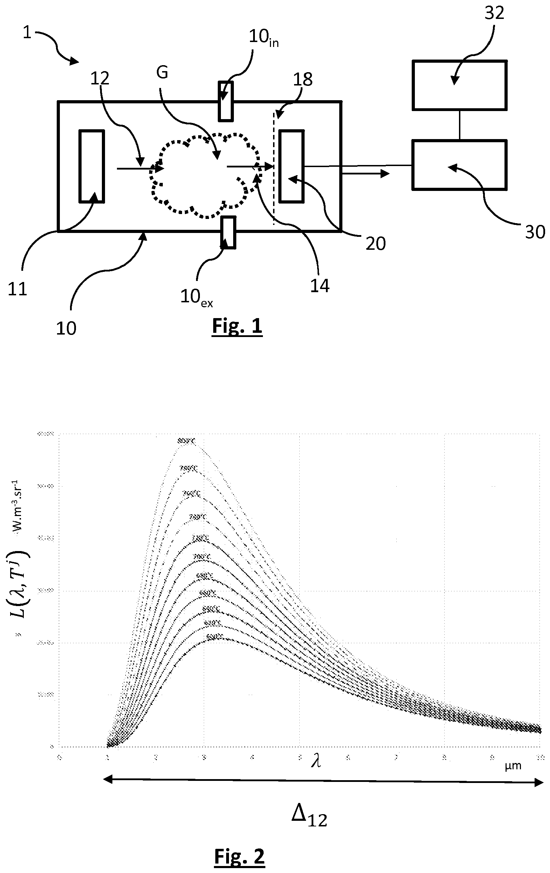

La figure 1 est un exemple d'un dispositif d'analyse 1 de gaz. Ce dispositif comporte une enceinte 10 définissant un espace interne à l'intérieur duquel se trouvent :

- une source de lumière 11, apte à émettre un rayonnement d'illumination 12, selon un spectre d'illumination, de façon à illuminer un gaz G s'étendant dans l'espace interne ;
- un capteur de lumière 20, apte à détecter un rayonnement lumineux 14 transmis par le gaz G sous l'effet de son illumination par le rayonnement d'illumination 12.

L'enceinte peut comporter une admission $10_{in}$ et une évacuation $10_{ex}$ permettant respectivement l'admission du gaz dans l'enceinte et son évacuation. L'admission et/ou l'évacuation du gaz peut être forcée ou spontanée. Ainsi, le gaz peut traverser l'enceinte par un simple effet de diffusion.

Le gaz G est un mélange gazeux comportant une pluralité d'espèces gazeuse $G_1...G_k...G_K$, K étant un entier positif quantifiant le nombre d'espèces gazeuses différentes présentes dans le mélange.

La source de lumière 11 est apte à émettre le rayonnement d'illumination 12 selon une pluralité de spectres d'illumination différents $S^1.. S^j.. S^J$, différents les uns des autres, dans une même bande spectrale d'illumination $\Delta_{12}$, ou J est un entier désignant le nombre de spectres. Par spectre, on entend un histogramme de l'intensité $I(\lambda)$ d'un rayonnement lumineux en fonction de la longueur d'onde $\lambda$. Le spectre de la source de lumière définit une bande spectrale d'illumination $\Delta_{12}$, cette dernière pouvant s'étendre entre le proche ultraviolet et l'infra-rouge moyen, entre 200 nm et 10 $\mu$m, et le plus souvent entre 1 $\mu$m et 10 $\mu$m.

Le dispositif comporte un processeur 30, par exemple un microprocesseur. Ce dernier est configuré pour recevoir un signal représentatif d'une intensité lumineuse détectée par le capteur de lumière 20, et exécuter les opérations de traitement décrites ci-après, de façon à déterminer une quantité de chaque espèce gazeuse recherchée. Le processeur 30 est relié à une mémoire 32 comportant des instructions permettant la mise en œuvre de certaines étapes du procédé décrit ci-après.

Selon un mode de réalisation, les différents spectres d'illumination $S^j$ sont obtenus en modulant une température de la source de lumière 11. Cette dernière peut alors être une source de lumière de type corps noir ou corps gris. Selon un autre mode de réalisation, les différents spectres d'illumination sont obtenus en utilisant une source de lumière 11 regroupant une pluralité de sources de lumières élémentaires $11_1,....11_N$, où N est un entier positif désignant le nombre de sources de lumières élémentaires constituant la source. Les sources de lumière élémentaires peuvent être des diodes électroluminescentes dont l'éclairement peut être modulé de façon à former différents spectres d'illumination dans la bande spectrale d'illumination $\Delta_{12}$.

La figure 2 montre différents spectres d'illumination $S^j$ d'une source de lumière 11, assimilée à une source dite de type corps noir, en fonction d'une température $T^j$ à laquelle est portée la source de lumière. Ces spectres suivent la loi de Planck, décrivant l'émission d'un corps noir selon une expression de type

$$L\left(\lambda, T^j\right) = \frac{2hc^2}{\lambda^5} \frac{1}{e^{\frac{hc}{\lambda k\, T^j}} - 1}, \text{(1)}$$

où

- $L(\lambda, T^j)$ est la luminance spectrale, dépendant de la longueur d'onde $\lambda$ et de la température de surface $T^j$ du corps noir,
- h est la constante de Planck,
- k est la constante de Boltzmann,
- c est la vitesse de la lumière dans l'air.

Une telle source de lumière est par exemple obtenue par un simple filament chauffé à une température comprise par exemple entre 400°C et 800°C. Dans le cas de la figure 2, on a représenté l'évolution de la luminance spectrale $L(\lambda, T^j)$ dans une plage de température comprise entre 600°C et 800 °C et selon une bande spectrale d'illumination $\Delta_{12}$ comprise entre 1 $\mu$m et 10 $\mu$m.

Ce type de source est particulièrement avantageux, car cela permet de moduler le spectre d'illumination $S^j$ par une simple modulation de la température $T^j$ de la source. A chaque température $T^j$ est associé un spectre d'illumination $S^j$. La modulation de la température de source peut être par exemple obtenue par une simple modulation d'un courant d'alimentation de la source de lumière. De plus, la modulation du spectre d'illumination est non linéaire. Par modulation non linéaire, on entend qu'en considérant respectivement un premier spectre d'illumination $S^1$ et un deuxième spectre d'illumination $S^2$, la modulation est telle que le ratio des intensités du spectre d'illumination entre une première longueur d'onde $\lambda_1$ et une deuxième longueur d'onde $\lambda_2$ est différent d'un spectre d'illumination à l'autre. Ceci peut être explicité par l'expression suivante :

$$\frac{I^1(\lambda_1)}{I^1(\lambda_2)} \neq \frac{I^2(\lambda_1)}{I^2(\lambda_2)} \quad (2)$$

où $I^j(\lambda_i)$ désigne l'intensité, à une longueur d'onde $\lambda_i$, du rayonnement d'illumination 12 de spectre $S^j$.

La plupart des espèces gazeuses connues absorbent tout ou partie d'un rayonnement électromagnétique selon un spectre d'absorption présentant une ou plusieurs bandes spectrales d'absorption $\Delta_k$, ainsi qu'un ou plusieurs pics d'absorption. L'absorption d'une espèce gazeuse $G_k$ peut être définie selon la loi de Beer Lambert, selon laquelle :

$$\frac{I(\lambda)}{I_0(\lambda)} = e^{-\mu_k(\lambda)x} \quad (3)$$

où :

- $I(\lambda)$ désigne l'intensité transmise par l'espèce gazeuse $G_k$ à la longueur d'onde $\lambda$, c'est-à-dire l'intensité du rayonnement détecté 14 à la longueur d'onde $\lambda$;
- $I_0(\lambda)$ désigne l'intensité incidente à l'espèce gazeuse $G_k$ à la longueur d'onde $\lambda$, c'est-à-dire l'intensité du rayonnement d'illumination 12 à la longueur d'onde $\lambda$;
- $\mu_k(\lambda)$ désigne un coefficient d'absorption dit linéaire de l'espèce gazeuse $G_k$ considérée, à la longueur d'onde $\lambda$;
- x désigne l'épaisseur de gaz traversée par le rayonnement lumineux entre la source de lumière et le capteur d'image.

Le coefficient d'absorption linéaire $\mu_k(\lambda)$ peut être exprimé sous la forme d'un produit d'un coefficient d'absorption linéaire molaire $\mu_k'(\lambda)$ par une quantité $c_k$ de l'espèce gazeuse $G_k$. Le coefficient d'absorption linéaire molaire représente le coefficient d'absorption linéaire par mole de l'espèce gazeuse considérée.

L'expression (3) devient :

$$\frac{I(\lambda)}{I_0(\lambda)} = e^{-\mu_k'(\lambda)c_k x} \quad (4)$$

Ainsi, $I(\lambda) = I_0(\lambda) e^{-\mu_k'(\lambda)c_k x} = I_0(\lambda)f^k(c_k, \lambda, x) \quad (5)$ où $f^k(c_k, \lambda, x) = e^{-\mu_k'(\lambda)c_k x} = e^{-\mu_k(\lambda)x} \quad (6)$, $f^k$ désignant une fonction spectrale d'absorption de l'espèce gazeuse $G_k$ dans l'épaisseur x. Cette fonction représente une proportion du rayonnement d'illumination absorbé par l'espèce gazeuse. Afin de prendre en compte le fait que tous les rayons lumineux traversant le gaz ne parcourent pas nécessairement le même chemin, l'épaisseur x peut être une grandeur statistique, par exemple la moyenne ou la médiane, représentative d'une distribution des parcours de différents rayons lumineux émis par la source. Si la distribution des chemins optiques D(x) est connue, elle peut être prise en compte en modifiant (4) en (4') :

$$\frac{I(\lambda)}{I_0(\lambda)} = \int_x e^{-\mu_k'(\lambda)c_k D(x)}dx \quad (4')$$

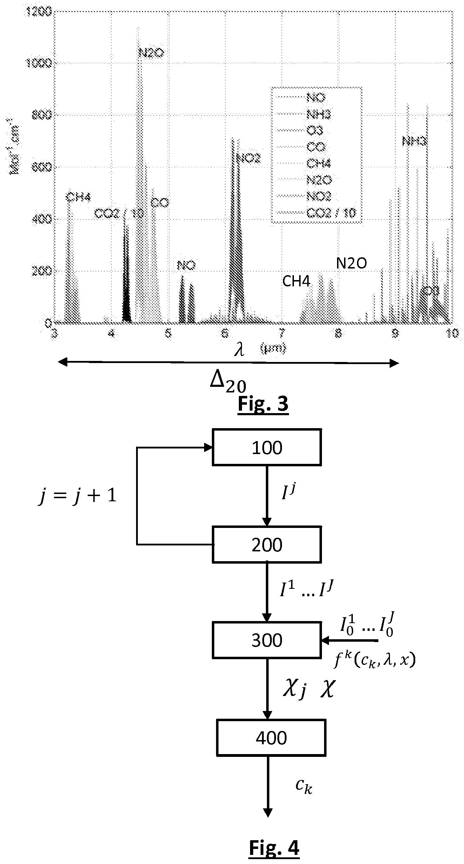

La figure 3 montre les spectres d'absorption, c'est-à-dire l'évolution du coefficient d'absorption linéaire moléculaire $\mu_k'(\lambda)$ de différentes espèces gazeuses, en fonction de la longueur d'onde. On constate que ces spectres d'absorption présentent des pics d'absorption dans différentes bandes spectrales, dites bandes spectrales d'absorption $\Delta_k$.

Par pic d'absorption, on entend un maximum local de l'évolution de l'absorption en fonction de la longueur d'onde. Par bande spectrale d'absorption $\Delta_k$, on entend une bande spectrale dans laquelle l'absorption est considérée comme significative, c'est-à-dire supérieure à 50 Mol$^{-1}$.cm$^{-1}$, ou 100 Mol$^{-1}$.cm$^{-1}$ voire 200 Mol$^{-1}$cm$^{-1}$ lorsque l'absorption est quantifiée par le coefficient d'absorption linéaire molaire. $CO_2$ dont on a représenté le dixième de la valeur du coefficient d'absorption linéaire molaire, présente une bande spectrale d'absorption entre 4.2 $\mu$m et 4.4 $\mu$m. $N_2O$ présente une première bande spectrale d'absorption comprise entre 4.3 $\mu$m et 4.6 $\mu$m, ainsi qu'une deuxième bande spectrale d'absorption entre 7.5 $\mu$m et 8 $\mu$m. CO comprend une bande spectrale d'absorption entre 4.5 $\mu$m et 4.8 $\mu$m. On constate que les bandes spectrales d'absorption de $N_2O$ et CO se recouvrent partiellement.

Selon l'art antérieur, si l'on souhaite déterminer une quantité $c_k$ de l'espèce gazeuse $G_k$ dans une enceinte, on sélectionne une longueur d'onde $\lambda$ à laquelle le coefficient d'atténuation linéaire molaire $\mu'_k(\lambda)$ est élevé, puis on illumine le gaz comportant l'espèce gazeuse $G_k$ à ladite longueur d'onde, selon une intensité $I_0(\lambda)$. La mesure d'une intensité $I(\lambda)$ transmise par le gaz permet de remonter à la quantité $c_k$ de l'espèce gazeuse $G_k$ selon l'expression (3). Lorsqu'on dispose d'une pluralité d'espèces gazeuses, on peut procéder à un éclairement successif du gaz selon différentes longueurs d'onde, et/ou utiliser une source de lumière à large spectre en réalisant une pluralité de détection successives de l'intensité $I(\lambda)$, chaque détection étant réalisée à une longueur d'onde $\lambda$ correspondant à un pic d'absorption d'une espèce gazeuse recherchée. L'utilisation d'une source de lumière à large spectre peut également nécessiter le recours à un filtre spécifique multibandes, comme décrit en lien avec l'art antérieur.

A la différence de ces principes, connus de l'art antérieur, l'invention est basée sur l'utilisation d'une source de lumière 11 dont le spectre d'illumination s'étend selon les bandes spectrales d'absorption de différentes d'espèces gazeuses recherchées. Ainsi, le gaz analysé est éclairé par un rayonnement lumineux 12 selon une bande spectrale d'illumination $\Delta_{12}$ dont la largeur spectrale est de préférence supérieure à 500 nm, voire à 1 $\mu$m, voire à 3 $\mu$m. Par largeur spectrale, on entend une différence entre la longueur d'onde la plus élevée et la longueur d'onde la plus faible de la bande spectrale d'illumination de la source. L'invention est également basée sur la détection, par le capteur de lumière 20, du rayonnement 14 transmis par le gaz G dans une bande spectrale de détection $\Delta_{20}$ dont la largeur spectrale est de préférence supérieure à 500 nm, voire à 1 $\mu$m, voire à 3 $\mu$m. Le capteur de lumière est, dans ce mode de réalisation, non résolu spectralement.

Contrairement au dispositif décrit dans WO2007064370, le rayonnement lumineux 14 transmis par l'échantillon est détecté par le capteur de lumière 20 dans une bande spectrale de détection $\Delta_{20}$ s'étendant continûment entre une longueur d'onde minimale $\lambda_{20-min}$ et une longueur d'onde maximale $\lambda_{20-max}$, et comportant la bande spectrale d'absorption $\Delta_k$ d'au moins deux espèces gazeuses candidates $G_k$. De préférence, la largeur de la bande spectrale de détection $\Delta_{20}$ s'étend sans discontinuité selon au moins 500 nm, voire 1 $\mu$m, voire encore davantage, par exemple selon un intervalle spectral supérieur à 2 $\mu$m ou à 5 $\mu$m. Ainsi, contrairement à l'art antérieur, il n'est pas nécessaire d'interposer un filtre multibandes présentant différentes bandes passantes, dont chaque bande passante est adaptée à une espèce gazeuse à détecter. Par conséquent, on peut, avec le même dispositif, déterminer les quantités d'espèces gazeuses dans différents mélanges, en adaptant le traitement, par le processeur 30, des intensités détectées, en fonction des espèces gazeuses $G_k$ susceptibles d'être présentes dans le gaz. Par exemple, la bande spectrale de détection $\Delta_{20}$ s'étend entre 3 $\mu$m et 8 $\mu$m. Le même dispositif 1 peut alors permettre une détermination des concentrations de $CO_2$, $CH_4$ et CO dans un mélange de gaz naturel, ou une détermination des concentrations de NO et $NO_2$ dans un mélange de type NOx. Les espèces gazeuses candidates sont déterminées a priori, en fonction de l'application et/ou du mélange gazeux analysé.

Le terme continûment signifie que le signal détecté par le capteur de lumière 20 comporte toutes les longueurs d'onde entre la longueur d'onde minimale $\lambda_{20-min}$ et la longueur d'onde maximale $\lambda_{20-max}$ évoquées ci-dessus.

Un aspect important de l'invention est que le gaz analysé G est soumis à une pluralité $J$ d'illuminations successives, respectivement selon différents rayonnements d'illumination 12, chacun présentant un spectre d'illumination $S^j$ adressant une pluralité de bandes spectrales d'absorption des espèces gazeuses candidates. De préférence, les rayonnements d'illumination s'étendent selon une même bande spectrale d'illumination $\Delta_{12}$ mais leurs spectres respectifs $S^j$, dans cette bande spectrale, fluctuent entre chaque illumination.

A chaque illumination selon un spectre $S^j$, le capteur de lumière 20 détecte un rayonnement 14 transmis par le gaz, dans la bande spectrale de détection $\Delta_{20}$ précédemment décrite. Le capteur de lumière délivre un signal dont l'intensité $I^j$ est représentative de l'intensité transmise par le gaz lorsqu'il est illuminé par le rayonnement d'illumination de spectre $S^j$. Cette intensité est telle que :

$$I^j = \int_\lambda I^j(\lambda) = \int_\lambda I_0^j(\lambda) \prod_k f^k(c_k, \lambda, x) = I_0^j \int_\lambda \prod_k f^k(c_k, \lambda, x) \quad (7)$$

$I_0^j$ est l'intensité du rayonnement d'illumination émis par la source de lumière. Il peut s'agir de l'intensité d'un signal de détection détecté par le capteur de lumière en l'absence de gaz entre la source de lumière 11 et le capteur de lumière 20 suite à l'illumination du capteur de lumière par un rayonnement d'illumination de spectre $S^j$.

Si $K$ désigne le nombre d'espèces gazeuses $G_k$ dont on souhaite déterminer la quantité $c_k$ dans le gaz $G$, on effectue $J$ séquences d'illumination / détection, de façon à obtenir $J$ signaux de détection, d'intensité $I^j$ telle qu'explicitée sur l'expression (7). Chaque signal de détection est détecté, de préférence, dans la même bande spectrale de détection $\Delta_{20}$. De préférence, le nombre $J$ de spectres d'émission $S^j$ différents les uns des autres est supérieur ou égal au nombre $K$ d'espèces gazeuses candidates : $J \geq K$.

Les intensités mesurées $I^j$ sont traitées par le microprocesseur 30 relié à la mémoire 32, dans laquelle sont stockées différentes grandeurs, notamment les fonctions spectrales d'absorption $f^k(c_k,\lambda,x)$ de chaque espèce gazeuse. La détermination de la quantité $c_k$ de chaque espèce gazeuse candidate $G_k$ peut alors être obtenue selon l'expression suivante :

$$(c_1 \dots c_K) = arg\min \sum_j \sqrt{(I^j)^2 - \left(\int_\lambda I_0^j(\lambda) \prod_k f^k(c_k,\lambda,x)\right)^2} = arg\min(\chi) \quad (8)$$

Autrement dit, les quantités recherchées $(c_1 \dots c_K)$ minimisent l'expression :

$$\chi = \sum_j \chi_j = \sum_j \sqrt{(I^j)^2 - \left(\int_\lambda I_0^j(\lambda) \prod_k f^k(c_k,\lambda,x)\right)^2} \quad (9)$$

$$\text{avec } \chi_j = \sqrt{(I^j)^2 - \left(\int_\lambda I_0^j(\lambda) \prod_k f^k(c_k,\lambda,x)\right)^2} = \sqrt{(I^j)^2 - I_0^{j2}\left(\int_\lambda \prod_k f^k(c_k,\lambda,x)\right)^2} \quad (10).$$

$$\text{soit } \chi_j = \sqrt{(I^j)^2 - \left(\hat{I}^j(c_k)\right)^2} \quad (11)$$

Ainsi, les quantités recherchées $c_k$ sont obtenues en déterminant un indicateur $X_j$ représentant une comparaison entre :

-  l'intensité lumineuse $I^j$ du rayonnement transmis par le gaz, mesurée par le capteur de lumière 20, suite à une illumination du gaz selon un spectre d'illumination $S^j$ ;
-  une estimation $\hat{I}^j(c_k)$ de l'intensité mesurée en fonction des quantités $c_k$ des espèces gazeuses candidates. Cette estimation est obtenue en prenant en compte l'intensité lumineuse $I_0^j$ du rayonnement d'illumination 12 produit par la source de lumière 11, que l'on multiplie par une grandeur représentative de l'absorption de chaque espèce gazeuse candidate $G_k$. Cette grandeur peut être obtenue par un produit des fonctions spectrales d'absorption $f^k(c_k,\lambda,x)$ de chaque espèce gazeuse candidate.

Un indicateur de comparaison $X_j$ peut être établi à chaque illumination de l'échantillon selon un spectre d'illumination $S^j$. On dispose alors d'autant d'indicateurs de comparaison $X_j$ que d'illuminations successives, ces indicateurs de comparaison pouvant être combinés, par exemple sous la forme d'une somme comme explicitée dans l'équation (9) de façon à établir un critère global de comparaison $X$. Les quantités recherchées $c_k$ sont celles pour lesquelles le critère global de comparaison s'approche d'une valeur prédéterminée.

Dans l'exemple décrit ci-dessus, la comparaison $X_j$ prendre la forme d'un écart quadratique, comme explicité selon l'expression (9). Les quantités recherchées $c_k$ sont celles minimisant le critère global de comparaison $X$. La comparaison peut prendre d'autres formes, par exemple un ratio, auquel cas les quantités recherchées sont celles pour lesquelles chaque indicateur de comparaison $X_j$ a une valeur la plus proche de 1.

Le terme quantité $c_k$ d'une espèce gazeuse candidate peut désigner un nombre de molécules, une masse, ou une concentration, c'est-à-dire une quantité par unité de volume ou de masse.

On va résumer, en lien avec la figure 3, les principales étapes d'un procédé de détection selon l'invention.

Au cours d'une étape d'illumination 100, le gaz analysé est éclairé selon un spectre d'illumination $S^j$ par la source de lumière 11. Le capteur de lumière acquiert un signal de détection dont on détermine l'intensité $I^j$, correspondant à l'intensité $I^j$ du rayonnement transmis par le gaz dans la bande spectrale de détection.

Au cours d'une étape de sortie de boucle 200, on détermine si le gaz analysé a été soumis à un nombre suffisant d'illuminations selon des spectres d'illumination $S^j$ différents. Si cette condition n'est pas satisfaite, la source de lumière 11 est ajustée, de façon à modifier le spectre d'illumination $S^j$, et un nouveau signal de détection est acquis dans la bande spectrale de détection $\Delta_{20}$. Lorsqu'on a procédé à un nombre suffisant d'illuminations, on passe à l'étape 300 de formation d'un indicateur de comparaison $X_j$ associé à chaque illumination. Cet indicateur prend en compte une intensité $I_0^j$ du rayonnement d'illumination 12 émis par la source de lumière. Cela correspond à l'intensité qui serait détectée par le capteur de lumière 20 en l'absence de gaz entre la source de lumière et le capteur de lumière, la source de lumière émettant selon le spectre d'illumination $S^j$.

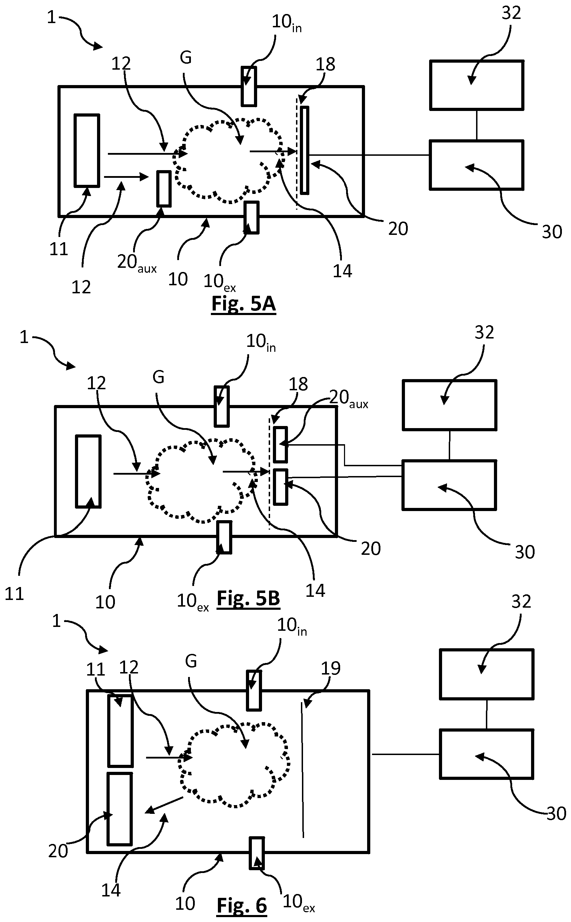

L'intensité $I_0^j$ du rayonnement d'illumination 12 émis par la source de lumière peut être détectée par le capteur de lumière 20 en l'absence de gaz entre la source de lumière et le capteur de lumière, la source de lumière émettant selon le spectre d'illumination $S^j$. Elle peut également être déterminée par un capteur de lumière auxiliaire $20_{aux}$, disposé face à la source de lumière, comme représenté sur la figure 5A. Dans ce cas, il n'y a pas de gaz interposé entre le capteur de lumière auxiliaire et la source de lumière. L'intensité du rayonnement d'illumination émis par la source de lumière peut également être estimée en disposant un capteur de lumière auxiliaire $20_{aux}$, dont la bande spectrale de détection, dite bande spectrale de détection auxiliaire, n'est pas impactée, ou impactée de façon jugée négligeable, par les bandes spectrales d'absorption des espèces gazeuses candidates. Une telle configuration est représentée sur la figure 5B. Par exemple, lorsque le mélange gazeux est de l'air, la bande spectrale de détection auxiliaire peut être étroite (c'est-à-dire dont la largeur spectrale est inférieure à 100 nm, voire 50 nm) et centrée autour 3.9 $\mu$m. L'intensité $I_0^j$ du rayonnement d'illumination peut alors être déterminée, en se basant par exemple sur une connaissance préalable de la forme du spectre d'illumination.

Au cours d'une étape 400 de minimisation, on détermine les quantités des espèces gazeuses candidates optimisant le critère global de comparaison $X$ formé à partir des différents indicateurs de comparaison $X_j$. Lorsque le critère global de comparaison correspond à celui explicité selon l'expression (9), les quantités recherchées minimisent sa valeur, en la faisant tendre vers 0.

Les étapes 300 et 400 sont mises en œuvre par le processeur 30, et sont adaptées aux espèces candidates recherchées, en particulier par la prise en compte des fonctions d'absorption $f^k(c_k,\lambda,x)$ des espèces candidates. Ainsi, le même dispositif peut être utilisé quel que soit le mélange gazeux considéré, le processeur prenant en compte les fonctions spectrales d'absorption des espèces gazeuses susceptibles d'être présentes dans le mélange. Il n'est pas nécessaire d'adapter physiquement le dispositif 1 par l'interposition d'un filtre multibandes comme suggéré dans l'art antérieur.

Selon un mode de réalisation, un filtre passe bande 18 est interposé entre la source de lumière 11 et le capteur de lumière 20, de façon à éliminer une détection d'un rayonnement lumineux dans une bande spectrale du spectre d'absorption de la vapeur d'eau. En effet, l'humidité peut induire une absorption significative susceptible de fausser les mesures. Dans ce cas, un filtre passe bande permet de rejeter les bandes spectrales significativement impactées par cette absorption. Ces bandes spectrales sont situées autour de 2.6 $\mu$m ainsi qu'entre 5.5 et 7.5 $\mu$m. Cela n'empêche pas qu'au moins une bande spectrale de détection continue comporte des pics de détection d'au moins deux espèces gazeuses candidates.

Selon un mode de réalisation, le capteur de lumière est placé de façon adjacente de la source, comme illustré sur la figure 6. Le dispositif comporte une surface réfléchissante 19 apte à réfléchir le rayonnement 12 émis par la source, et ayant traversé le gaz, vers le capteur de lumière. Cette configuration est dite "en réflexion" par opposition à une configuration "en transmission" dans laquelle le gaz analysé s'étend entre la source de lumière et le capteur de lumière. Une configuration en réflexion tend à allonger le trajet du rayonnement à travers gaz, ce qui accroît la sensibilité du dispositif.

L'invention pourra être mise en œuvre pour l'analyse de la qualité de l'air, pour l'analyse de gaz naturel, pour la détection d'espèces gazeuses cibles, par exemple des espèces gazeuses toxiques.

## Revendications

1. Procédé d'analyse d'un gaz, pour estimer une quantité ($c_k$) de plusieurs espèces gazeuses ($G_k$) différentes, dites espèces gazeuses candidates, potentiellement présentes dans le gaz, chaque espèce gazeuse candidate étant apte à absorber un rayonnement lumineux dans une bande spectrale d'absorption ($\Delta_x$), le procédé comportant les étapes suivantes :

   a) disposition du gaz entre une source de lumière (11) et un capteur de lumière (20), la source de lumière (11) étant apte à émettre un rayonnement d'illumination (12) se propageant à travers le gaz, le capteur de lumière (20) étant apte à détecter un rayonnement (14) transmis par le gaz et à délivrer un signal de détection représentatif d'une intensité ($I^j$) du rayonnement détecté ;
   b) illumination du gaz ($G$) à l'aide de la source de lumière (11), le rayonnement d'illumination du gaz (12) présentant un spectre d'illumination ($S^j$), le spectre d'illumination s'étendant continûment sur une bande spectrale, dite bande spectrale d'illumination ($\Delta_{12}$), recouvrant la bande spectrale d'absorption ($\Delta_x$) d'une pluralité d'espèces gazeuses candidates,;

c) lors de l'illumination, détection, par le capteur de lumière (20), d'un rayonnement transmis (14) par ledit gaz ;

d) réitération des étapes b) et c), en ajustant la source de lumière (11) de telle sorte qu'à chaque étape b), le spectre d'illumination ($S^j$) soit modifié ;

e) estimation d'une quantité ($c_k$) de chacune des espèces gazeuses candidates en fonction des intensités ($I^j$) des rayonnements respectivement détectés lors de chaque étape c), chaque intensité ($I^j$) étant associée à un spectre d'illumination ($S^j$);

dans lequel

- lors de chaque étape c), le rayonnement transmis par le gaz est détecté dans au moins une même bande spectrale de détection ($\Delta_{20}$), s'étendant continûment entre une longueur d'onde minimale ($\lambda_{20\text{-}min}$) jusqu'à une longueur d'onde maximale ($\lambda_{20\text{-}max}$), selon une largeur spectrale d'au moins 1 $\mu$m, et recouvrant des bandes spectrales d'absorption ($\Delta_x$) de plusieurs espèces gazeuses candidates,

- et lors de chaque itération des étapes b) et c), le spectre d'illumination ($S^j$) s'étendant continûment sur la bande spectrale d'illumination est modifié dans cette même bande spectrale d'illumination ($\Delta_{12}$).

2. Procédé selon la revendication précédente, dans lequel au moins deux espèces gazeuses candidates présentent un coefficient d'absorption molaire supérieur à 50 Mol$^{-1}$cm$^{-1}$ dans la bande spectrale de détection ($\Delta_{20}$).

3. Procédé selon l'une quelconque des revendications précédentes, dans lequel l'étape e) comporte la formation d'indicateurs de comparaison ($X_j$), chaque indicateur de comparaison représentant une comparaison entre :

- l'intensité ($I^j$) du rayonnement détecté par le capteur de lumière lors de chaque étape c) suite à une illumination du gaz selon un spectre d'illumination ($S^j$) ;

- une estimation de ladite intensité ($\hat{I}^j(c_k)$) en fonction des quantités ($c_k$) des espèces gazeuses candidates ;

l'étape e) comportant également une détermination d'un critère global de comparaison ($X$) à partir des indicateurs de comparaison ($X_j$), les quantités des espèces gazeuses candidates ($c_k$) étant celles pour lesquelles le critère global de comparaison ($X$) tend vers une valeur prédéterminée.

4. Procédé d'analyse selon la revendication 3, dans lequel chaque estimation ($\hat{I}^j(c_k)$) de l'intensité du rayonnement détecté est obtenue par :

une association, à chaque espèce gazeuse candidate, d'une fonction spectrale d'absorption $f^k(c_k, \lambda, x)$ dépendant de la quantité ($c_k$) de ladite espèce gazeuse candidate;

une prise en compte d'une intensité $(I_0^j)$ du rayonnement d'illumination émis par la source de lumière (11) ;

l'estimation de l'intensité du rayonnement détecté ($\hat{I}^j(c_k)$) étant obtenue en effectuant un produit de l'intensité du rayonnement d'illumination émis par la source de lumière $(I_0^j)$ par les fonctions spectrales d'absorption ($f^k(c_k, \lambda, x)$) associées à chaque espèce gazeuse candidate.

5. Procédé d'analyse selon l'une quelconque des revendications précédentes, dans lequel la source de lumière (11) est une source émettant un rayonnement d'illumination (12) dont le spectre d'illumination ($S^j$) varie, dans la bande spectrale d'illumination ($\Delta_{12}$), en fonction d'une température ($T^j$) de la source de lumière, de telle sorte que lors de chaque étape b), la température de la source est modifiée.

6. Procédé d'analyse selon l'une quelconque des revendications 1 à 4, dans lequel la source de lumière comporte des sources de lumières élémentaires aptes à être activées indépendamment les unes des autres, de façon à permettre une modulation du spectre d'illumination ($S^j$) dans la bande spectrale d'illumination ($\Delta_{12}$).

7. Procédé d'analyse selon l'une quelconque des revendications précédentes, dans lequel la bande spectrale de détection ($\Delta_{20}$) est comprise entre 200 nm et 10 $\mu$m ou entre 1 $\mu$m et 10 $\mu$m.

8. Procédé d'analyse selon l'une quelconque des revendications précédentes, dans lequel au cours d'au moins deux illuminations, le spectre d'illumination ($S^j$) comporte une première longueur d'onde ($\lambda_1$) et une deuxième longueur

d'onde ($\lambda_2$), le ratio de l'intensité du rayonnement d'illumination (12) dans la première longueur d'onde sur l'intensité du rayonnement d'illumination dans la deuxième longueur d'onde étant différent entre lesdites illuminations.

9. Procédé d'analyse selon l'une quelconque des revendications précédentes, comportant, préalablement à l'étape e), une définition des espèces gazeuses candidates ($G_k$) susceptibles d'être présentes dans le gaz.

10. Procédé d'analyse selon l'une quelconque des revendications précédentes, dans lequel deux bandes spectrales d'absorption ($\Delta_x$) de deux espèces gazeuses candidates ($G_k$) se recouvrent au moins partiellement.

11. Procédé d'analyse selon l'une quelconque des revendications précédentes, dans lequel lors de chaque étape b), la bande spectrale d'illumination a une largeur spectrale supérieure à 500 nm.

12. Dispositif (1) d'analyse d'un gaz, le gaz comportant potentiellement une quantité ($c_k$) de plusieurs espèces gazeuses ($G_k$) différentes, dites espèces gazeuses candidates, chaque espèce gazeuse candidate étant apte à absorber un rayonnement lumineux dans une bande spectrale d'absorption ($\Delta_x$) comportant :

- une source de lumière (11), apte à émettre un rayonnement lumineux (12), la source de lumière étant également apte à être modulée de telle sorte que le spectre du rayonnement lumineux émis ($S^j$), dit spectre d'illumination, s'étend continûment sur une bande spectrale d'illumination et est variable dans cette même bande spectrale d'illumination ($\Delta_{12}$) ;
- un capteur de lumière (20), apte à détecter un rayonnement lumineux selon au moins une bande spectrale de détection ($\Delta_{20}$), la bande spectrale de détection s'étendant continûment entre une longueur d'onde minimale ($\lambda_{20\text{-}min}$,) jusqu'à une longueur d'onde maximale ($\lambda_{20\text{-}max}$), selon une largeur spectrale d'au moins 1 $\mu$m;
- une enceinte (10), apte à recevoir le gaz, agencée de telle sorte que le capteur de lumière soit configuré pour détecter un rayonnement lumineux (14) ayant traversé le gaz;
- un processeur (30), configuré pour estimer d'une quantité ($c_k$) de chacune des espèces gazeuses candidates en fonction d'intensités ($I^j$) de rayonnements respectivement détectés par le capteur de lumière dans la bande spectrale de détection, le gaz étant illuminé selon différents spectres d'illumination ($S^j$), chaque intensité ($I^j$) étant associée à un spectre d'illumination.

13. Dispositif selon la revendication 12, dans lequel la source de lumière (11) est une source émettant un rayonnement d'illumination (12) dont le spectre d'illumination ($S^j$) varie, dans la bande spectrale d'illumination ($\Delta_{12}$), en fonction d'une température ($T^j$) de la source de lumière.

14. Dispositif selon la revendication 12, dans lequel la source de lumière comporte des sources de lumières élémentaires aptes à être activées indépendamment les unes des autres, de façon à permettre une modulation du spectre d'illumination ($S^j$) dans la bande spectrale d'illumination ($\Delta_{12}$).

**Patentansprüche**

1. Verfahren zur Analyse eines Gases zum Schätzen einer Menge ($c_k$) mehrerer verschiedener Kandidaten-Gasspezies ($G_k$), die potentiell im Gas vorhanden sind, wobei jede Kandidaten-Gasspezies geeignet ist, eine Lichtstrahlung in einem Absorbtions-Spektralband ($\Delta_x$) zu absorbieren, wobei das Verfahren die folgenden Schritte aufweist:

a) Anordnen des Gases zwischen einer Lichtquelle (11) und einem Lichtsensor (20), wobei die Lichtquelle (11) geeignet ist, eine Beleuchtungsstrahlung (12) abzugeben, die sich durch das Gas ausbreitet, wobei der Lichtsensor (20) geeignet ist, eine Strahlung (14) zu detektieren, die vom Gas übertragen wird, und ein Detektionssignal auszugeben, das für eine Intensität ($I^j$) der detektierten Strahlung repräsentativ ist;
b) Beleuchten des Gases (G) mithilfe der Lichtquelle (11), wobei die Beleuchtungsstrahlung des Gases (12) ein Beleuchtungsspektrum ($S^j$) aufweist, wobei sich das Beleuchtungsspektrum durchgehend über ein Beleuchtungs-Spektralband ($\Delta_{12}$) erstreckt, das das Absorbtions-Spektralband ($\Delta_x$) einer Mehrzahl von Kandidaten-Gasspezies abdeckt;
c) beim Beleuchten, Detektieren einer Strahlung, die vom Gas übertragen (14) wird, durch den Lichtsensor (20);
d) Wiederholen der Schritte b) und c), wobei die Lichtquelle (11) so justiert wird, dass bei jedem Schritt b) das Beleuchtungsspektrum ($S^j$) verändert wird;
e) Schätzen einer Menge ($c_k$) jeder der Kandidaten-Gasspezies in Abhängigkeit von den Intensitäten ($I^j$) der Strahlungen, die jeweils bei jedem Schritt c) detektiert werden, wobei jede Intensität ($I^j$) einem Beleuchtungsspektrum (S$^j$) zugeordnet ist;

wobei

- bei jedem Schritt c) die Strahlung, die vom Gas übertragen wird, in mindestens einem selben Detektions-Spektralband ($\Delta_{20}$) detektiert wird, das sich durchgehend zwischen einer Mindestwellenlänge ($\lambda_{20\text{-}min}$) bis zu einer maximalen Wellenlänge ($\lambda_{20\text{-}max}$) gemäß einer Spektralbreite von mindestens 1 $\mu$m erstreckt und Absorbtions-Spektralbänder ($\Delta_x$) mehrerer Kandidaten-Gasspezies abdeckt,
- und bei jeder Wiederholung der Schritte b) und c) das Spektrum der Beleuchtungsstrahlung (S$^j$), das sich durchgehend über das Beleuchtungs-Spektralband erstreckt, in diesem selben Beleuchtungs-Spektralband ($\Delta_{12}$) verändert wird.

2. Verfahren nach dem vorhergehenden Anspruch, wobei mindestens zwei Kandidaten-Gasspezies einen molaren Absorptionskoeffizienten größer als 50 Mol$^{-1}$cm$^{-1}$ im Detektions-Spektralband ($\Delta_{20}$) aufweisen.

3. Verfahren nach einem der vorhergehenden Ansprüche, wobei der Schritt e) das Bilden von Vergleichsindikatoren (Xj) aufweist, wobei jeder Vergleichsindikator einen Vergleich darstellt, zwischen:

- der Intensität (I$^j$) der Strahlung, die vom Lichtsensor bei jedem Schritt c) nach einer Beleuchtung des Gases gemäß einem Beleuchtungsspektrum (S$^j$) detektiert wird;
- einer Schätzung der Intensität ($\hat{I}^j(c_k)$) in Abhängigkeit von den Mengen ($c_k$) der Kandidaten-Gasspezies;

wobei der Schritt e) ebenfalls ein Bestimmen eines Gesamt-Vergleichskriteriums (X) ausgehend von den Vergleichsindikatoren (Xj) aufweist, wobei die Mengen der Kandidaten-Gasspezies ($c_k$) diejenigen sind, für welche das Gesamt-Vergleichskriterium (X) zu einem vorbestimmten Wert neigt.

4. Analyseverfahren nach Anspruch 3, wobei jede Schätzung ($\hat{I}^j(c_k)$) der Intensität der detektierten Strahlung durch Folgendes erhalten wird:

- eine Zuordnung einer spektralen Absorbtionsfunktion $f^k(c_{k,\lambda},x)$, die von der Menge ($c_k$) der Kandidaten-Gasspezies abhängig ist, zu jeder Kandidaten-Gasspezies;
- eine Berücksichtigung einer Intensität $\left(I_0^j\right)$ der Beleuchtungsstrahlung, die von der Lichtquelle (11) abgegeben wird;

wobei die Schätzung der Intensität der detektierten Strahlung ($\hat{I}^j(c_k)$) durch Bildung eines Produkts der Intensität der Beleuchtungsstrahlung, die von der Lichtquelle $\left(I_0^j\right)$ abgegeben wird, mit den spektralen Absorptionsfunktionen ($f^k(c_k,\lambda,x)$), die jeder Kandidaten-Gasspezies zugeordnet sind, erhalten wird.

5. Analyseverfahren nach einem der vorhergehenden Ansprüche, wobei die Lichtquelle (11) eine Quelle ist, die eine Beleuchtungsstrahlung (12) abgibt, deren Beleuchtungsspektrum (S$^j$) im Beleuchtungs-Spektralband ($\Delta_{12}$) in Abhängigkeit von einer Temperatur (T$^j$) der Lichtquelle variiert, so dass bei jedem Schritt b) die Temperatur der Quelle verändert wird.

6. Analyseverfahren nach einem der Ansprüche 1 bis 4, wobei die Lichtquelle Elementarlichtquellen aufweist, die geeignet sind, unabhängig voneinander aktiviert zu werden, so dass eine Modulation des Beleuchtungsspektrums (S$^j$) im Beleuchtungs-Spektralband ($\Delta_{12}$) gestattet wird.

7. Analyseverfahren nach einem der vorhergehenden Ansprüche, wobei das Detektions-Spektralband ($\Delta_{20}$) zwischen 200 nm und 10 $\mu$m oder zwischen 1 $\mu$m und 10 $\mu$m liegt.

8. Analyseverfahren nach einem der vorhergehenden Ansprüche, wobei im Verlauf mindestens zweier Beleuchtungen das Beleuchtungsspektrum (S$^j$) eine erste Wellenlänge ($\lambda_1$) und eine zweite Wellenlänge ($\lambda_2$) aufweist, wobei das Verhältnis der Intensität der Beleuchtungsstrahlung (12) in der ersten Wellenlänge zur Intensität der Beleuchtungsstrahlung in der zweiten Wellenlänge zwischen den Beleuchtungen unterschiedlich ist.

9. Analyseverfahren nach einem der vorhergehenden Ansprüche, aufweisend, vor dem Schritt e) ein Definieren der Kandidaten-Gasspezies ($G_k$), die im Gas vorhanden sein können.

10. Analyseverfahren nach einem der vorhergehenden Ansprüche, wobei sich zwei Absorbtions-Spektralbänder ($\Delta_x$) zweier Kandidaten-Gasspezies ($G_k$) wenigstens teilweise überdecken.

11. Analyseverfahren nach einem der vorhergehenden Ansprüche, wobei bei jedem Schritt b) das Beleuchtungs-Spektralband eine Spektralbreite größer als 500 nm aufweist.

12. Vorrichtung (1) zur Analyse eines Gases, wobei das Gas potentiell eine Menge ($c_k$) mehrerer verschiedener Kandidaten-Gasspezies ($G_k$) aufweist, wobei jede Kandidaten-Gasspezies geeignet ist, eine Lichtstrahlung in einem Absorbtions-Spektralband ($\Delta_x$) zu absorbieren, aufweisend:

    - eine Lichtquelle (11), die geeignet ist, eine Lichtstrahlung (12) abzugeben, wobei die Lichtquelle ebenfalls geeignet ist, so moduliert zu werden, dass das Spektrum der abgegebenen Lichtstrahlung ($S^j$), das Beleuchtungsspektrum, sich durchgehend über ein Spektralband erstreckt und in diesem selben Beleuchtungs-Spektralband ($\Delta_{12}$) variable ist;
    - einen Lichtsensor (20), der geeignet ist, eine Lichtstrahlung gemäß mindestens einem Detektions-Spektralband ($\Delta_{20}$) zu detektieren, wobei sich das Detektions-Spektralband durchgehend zwischen einer Mindestwellenlänge ($\lambda_{20\text{-min}}$) bis zu einer maximalen Wellenlänge ($\lambda_{20\text{-max}}$) gemäß einer Spektralbreite von mindestens 1 $\mu$m erstreckt;
    - einen geschlossenen Raum (10), der geeignet ist, das Gas aufzunehmen, der so angeordnet ist, dass der Lichtsensor ausgebildet ist, eine Lichtstrahlung (14) zu detektieren, die das Gas durchquert hat;
    - einen Prozessor (30), der dazu ausgebildet ist, eine Menge ($c_k$) jeder der Kandidaten-Gasspezies in Abhängigkeit von Intensitäten ($I^j$) von jeweiligen Strahlungen zu schätzen, die vom Lichtsensor im Detektions-Spektralband detektiert werden, wobei das Gas gemäß verschiedenen Beleuchtungsspektren ($S^1$) beleuchtet wird, wobei jede Intensität ($I^j$) einem Beleuchtungsspektrum zugeordnet ist.

13. Vorrichtung nach Anspruch 12, wobei die Lichtquelle (11) eine Quelle ist, die eine Lichtstrahlung (12) abgibt, deren Beleuchtungsspektrum ($S^j$) im Beleuchtungsspektrum ($\Delta_{12}$) in Abhängigkeit von einer Temperatur ($T^j$) der Lichtquelle variiert.

14. Vorrichtung nach Anspruch 12, wobei die Lichtquelle Elementarlichtquellen aufweist, die geeignet sind, unabhängig voneinander aktiviert zu werden, so dass eine Modulation des Beleuchtungsspektrums ($S^j$) im Beleuchtungs-Spektralband ($\Delta_{12}$) gestattet wird.


**Claims**

1. A method for analyzing a gas, in order to estimate an amount ($c_k$) of a plurality of different gaseous species ($G_k$), called the candidate gaseous species, potentially present in the gas, each candidate gaseous species being able to absorb light radiation in an absorption spectral band ($\Delta_x$), the method comprising the following steps:

    a) placing the gas between a light source (11) and a light sensor (20), the light source (11) being able to emit illuminating radiation (12) that propagates through the gas, the light sensor (20) being able to detect radiation (14) transmitted by the gas and to deliver a detection signal representative of an intensity ($I^j$) of the detected radiation;
    b) illuminating the gas ($G$) using the light source (11), the radiation illuminating the gas (12) having an illumination spectrum ($S^j$), the illumination spectrum extending continuously in a spectral band, called the illumination spectral band ($\Delta_{12}$), covering the absorption spectral band ($\Delta_x$) of a plurality of candidate gaseous species;
    c) during the illuminating step, detecting, with the light sensor (20), a radiation (14) transmitted by said gas;
    d) reiterating steps b) and c), while adjusting the light source (11) such that, in each step b), the illumination spectrum ($S^j$) is modified;
    e) estimating an amount ($c_k$) of each of the candidate gaseous species depending on the intensities ($I^j$) of the radiation detected in each step c), respectively, each intensity ($I^j$) being associated with one illumination spectrum ($S^j$);

    wherein :

12

in each step c), the radiation transmitted by the gas is detected in at least a same detection spectral band ($\Delta_{20}$), extending continuously between a minimum wavelength ($\lambda_{20\text{-min}}$) and a maximum wavelength ($\lambda_{20\text{-}max}$), with a spectral width of at least 1 $\mu$m, and covering absorption spectral bands ($\Delta_x$) of a plurality of candidate gaseous species ;

and in each iteration of steps b) and c), the illumination spectrum ($S^j$), extending continuously in the illumination spectral band, is modified within the same illumination spectral band ($\Delta_{12}$).

2. The method as claimed in the preceding claim, wherein at least two candidate gaseous species have a molar absorption coefficient higher than 50 Mol$^{-1}$cm$^{-1}$ in the detection spectral band ($\Delta_{20}$).

3. The method as claimed in either of the preceding claims, wherein step e) comprises forming comparison indicators ($X_j$), each comparison indicator representing a comparison between:

- the intensity ($I^j$) of the radiation detected by the light sensor in each step c) following an illumination of the gas with an illumination spectrum ($S^j$);
- an estimate of said intensity ($\hat{I}^j(c_k)$) dependent on amounts ($c_k$) of the candidate gaseous species;

step e) also comprising determining an overall criterion of comparison ($X$) from the comparison indicators ($X_j$), the amounts of the candidate gaseous species ($c_k$) being those for which the overall criterion of comparison ($X$) tends toward a preset value.

4. The analyzing method as claimed in claim 3, wherein each estimate ($\hat{I}^j(c_k)$) of the intensity of the detected radiation is obtained by:

- associating, with each candidate gaseous species, an absorption spectral function $f^k(c_k,\lambda,x)$ dependent on the amount ($c_k$) of said candidate gaseous species;
- taking into account an intensity $\left(I_0^j\right)$ of the illuminating radiation emitted by the light source (11);

the estimate of the intensity of the detected radiation ($\hat{I}^j(c_k)$) being obtained by multiplying the intensity of the illuminating radiation emitted by the light source $\left(I_0^j\right)$ by the absorption spectral functions ($f^k(c_k,\lambda,x)$) associated with each candidate gaseous species.

5. The analyzing method as claimed in any one of the preceding claims, wherein the light source (11) is a source that emits illuminating radiation (12) the illumination spectrum ($S^j$) of which varies, in the illumination spectral band ($\Delta_{12}$), as a function of a temperature ($T^j$) of the light source, such that, in each step b), the temperature of the source is modified.

6. The analyzing method as claimed in any one of claims 1 to 4, wherein the light source comprises elementary light sources that are able to be activated independently of one another, so as to allow the illumination spectrum ($S^j$) to be modulated in the illumination spectral band ($\Delta_{12}$).

7. The analyzing method as claimed in any one of the preceding claims, wherein the detection spectral band ($\Delta_{20}$) is comprised between 200 $\mu$m and 10 $\mu$m or between 1 $\mu$m and 10 $\mu$m.

8. The analyzing method as claimed in any one of the preceding claims, wherein, during at least two illuminations, the illumination spectrum ($S^j$) comprises a first wavelength ($\lambda_1$) and a second wavelength ($\lambda_2$), the ratio of the intensity of the illuminating radiation (12) at the first wavelength to the intensity of the illuminating radiation at the second wavelength being different between said illuminations.

9. The analyzing method as claimed in any one of the preceding claims, comprising, prior to step e), defining the candidate gaseous species ($G_k$) liable to be present in the gas.

10. The analyzing method as claimed in any one of the preceding claims, wherein two absorption spectral bands ($\Delta_x$) of two candidate gaseous species ($G_k$) at least partially overlap.

**11.** The analyzing method as claimed in any one of the preceding claims, wherein in each step b), the illumination spectral band has a spectral width wider than 500 nm.

**12.** A device (1) for analyzing a gas, the gas potentially comprising a quantity ($c_k$) of, a plurality of different gaseous species ($G_k$), called the candidate gaseous species, , each candidate gaseous species being able to absorb light radiation in an absorption spectral band ($\Delta_x$), comprising:

- a light source (11), able to emit light radiation (12), the light source also being able to be modulated such that the spectrum ($S^j$) of the emitted light radiation, called the illumination spectrum, continuously extends in an illumination spectral band and is variable in this illumination spectral band ($\Delta_{12}$);
- a light sensor (20), able to detect light radiation in at least one detection spectral band ($\Delta_{20}$), the detection spectral band continuously extending between a minimum wavelength ($\lambda_{20-min}$) and a maximum wavelength ($\lambda_{20-max}$), with a spectral width of at least 1 $\mu$m ;
- a chamber (10), able to receive the gas, arranged such that the light sensor is configured to detect light radiation (14) having passed through the gas;
- a processor (30), configured to estimate an amount ($c_k$) of each of the candidate gaseous species depending on the intensities ($I^j$) of the radiation respectively detected by the light sensor in the detection spectral band, the gas being illuminated by various illumination spectra, each intensity being associated with an illumination spectrum.

**13.** The device of claim 12; wherein the light source is a source emitting a light radiation (12), the illumination spectrum ($S^j$) of which varies, in the illumination spectral band ($\Delta_{12}$), as a function of a temperature ($T^j$) of the light source.

**14.** The device of claim 12, wherein the light source comprises elementary light sources that are able to be activated independently of one another, so as to allow the illumination spectrum ($S^j$) to be modulated in the illumination spectral band ($\Delta_{12}$).

**Fig. 1**

$$\Delta_{12}$$

**Fig. 2**

**Fig. 3**

**Fig. 4**

**Fig. 5A**

**Fig. 5B**

**Fig. 6**

**EP 3 507 588 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2007064370 A

- US 2009213380 A